# EUROPEAN PATENT SPECIFICATION

(11) **EP 3 587 182 B1**
(45) Date of publication and mention of the grant of the patent: **21.04.2021**
(21) Application number: 19182084.4
(22) Date of filing: 24.06.2019
(51) Int. Cl.: B60P 7/08, B60P 7/10

(54) **ANTI-SLIP DEVICE FOR A CARGO FLOOR**
ANTIRUTSCHVORRICHTUNG FÜR EINEN LADERAUMBODEN
DISPOSITIF ANTIDÉRAPAGE POUR PLANCHER DE CHARGEMENT

(30) Priority: 29.06.2018 BE 201805455
(43) Date of publication of application: 01.01.2020
(73) Proprietor: Versus-Omega, 3660 Oudsbergen (BE)
(72) Inventor: ROGIERS, Erik, 3850 Kozen (BE); Marcel Craeghs, 3960 Bree (BE)
(74) Representative: Gevers Patents

(56) References cited:
- DE-A1- 3 345 741
- DE-A1-102005 007 431
- DE-A1-102014 217 545
- US-A1- 2007 212 184

## Description

The present invention relates to an anti-slip device for a cargo floor of a cargo space of a truck or trailer, said cargo floor having a top face arranged for supporting goods. In particular, these goods are strapped against the cargo floor by means of one or more tie-down straps. Optionally, the goods are transported on pallets, such as for instance EUR-pallets. The present invention also relates to a cargo floor provided with one or more anti-slip devices, as well as a truck or trailer provided with such a cargo floor. The present invention further relates to a construction kit for constructing such a anti-slip device.

During transport of goods using a truck, the cargo is subjected to various forces, such as forces due to starting or stopping, or lateral forces while turning. If these forces exceed the static frictional force between the cargo and the cargo floor, the cargo will start to slide in the cargo space, which is undesirable. This may cause parts of the cargo to become damaged, unbalance the truck and complicate its unloading. Anti-slip devices are known in the art that, between the loading and unloading of the cargo, allow the frictional force between the cargo and the cargo floor to be increased in order to prevent the cargo from sliding during transport Document DE 33 45 741 A1 discloses such an anti-slip device.

A known anti-slip device is to position a plurality of anti-slip mats directly onto the cargo floor, these may, for instance, be glued down, but are often not installed until the cargo space is being loaded. Such anti-slip mats are legally required to comply with the standard "VDI 2700 Blatt 15 - May 2009". Such anti-slip mats typically have a tensile strength of at least 0.6 N/mm², preferably at least 0.8 N/mm², and a load capacity of at least 150 ton/m², preferably at least 250 ton/m². The anti-slip mats typically comprise crumb rubber bound with polyurethane, with a typical density of between 900 and 1100 kg/m³. The static coefficient of friction is typically at least 0.6 in dry conditions. The anti-slip mats often have a thickness between 3 mm and 10 mm.

A disadvantage of the known anti-slip device is that the application of the anti-slip mats during loading may be forgotten, or that there may not be time for it. If the anti-slip mats are glued down, it frequently occurs that they become detached during loading or unloading of the cargo space, for instance due to a pallet or pallet truck snagging on the anti-slip mat. In other words, the anti-slip device is not present at all times and on all parts of the cargo floor, as a result of which parts of the cargo may still slide during transport.

Documents DE-A-100 13 972 and DE-A-10 2007 061 821 each describe an anti-slip device for a cargo floor of a cargo space in which goods are transported on pallets, wherein the anti-slip elements are prevented from being forgotten or becoming detached from the cargo floor during loading and unloading. The cargo floor is made from a sufficiently hard material, for instance wood or metal, across which the pallets are slidable. In the hard material, recesses are provided, into which strips are placed that are made from an elastic anti-slip material, such as for instance recycled rubber. Within the anti-slip strips, a chamber is provided that can be pressurized by pneumatic or hydraulic means. By pressurizing the inner chamber, a portion of the anti-slip strips rises above the surface formed by the hard material. These protrusions are located in particular directly adjacent to the pallets, and also between the bars of the pallets as the anti-slip strips are pressed and held down under the pallets themselves. In this way, horizontal movement of the pallets during transport is prevented. In their deflated state, the anti-slip strips are located beneath the top face of the cargo floor so that they cannot become detached or be damaged during loading or unloading of the cargo space.

A disadvantage of the anti-slip devices described in DE-A-100 13 972 and DE-A-10 2007 061 821 is the use of an inflatable material to create the anti-slip device. In particular, the material from which the anti-slip strips are made should be sufficiently extendable for it to be able to be deformed locally, i.e. close to a leg of a pallet or to an edge of an item of cargo, to a sufficient extent for the protrusion to be sufficiently high to prevent any horizontal movements. A direct consequence of this is that, in the deflated state, the inflatable material is not sufficiently sturdy to serve as a cargo floor. Specifically, if the pallets are loaded using a pallet truck or a forklift, it may occur that one or more of the wheels of the pallet truck or the forklift become stuck in one of the recesses, which makes loading and unloading of the goods time consuming. The inflatable material may also become damaged in this way. Moreover, such inflatable materials typically do not comply with the standard "VDI 2700 Blatt 15 - May 2009".

Furthermore, the inflatable material may also be damaged by contact with the goods. In particular, the bottom edge of the protrusion, which abuts against the goods, may possibly be damaged by goods undergoing a slight shift upon abrupt maneuvers during transport.

A further disadvantage of the known anti-slip devices is that the inflatable material may be damaged by an excess of pneumatic pressure. The reason is that the inflatable material may bulge upward to a virtually unlimited degree with continuously increasing pressure. The flexibility of the inflatable material typically also decreases its lifespan due to more readily occurring wear and/or damage.

Furthermore, the known anti-slip devices do not allow an easy replacement of a damaged portion of inflatable material. Specifically, at least one entire anti-slip strip needs to be replaced (or multiple strips in case they share one integrally provided inner chamber), which is time consuming and expensive.

Moreover, a significant number of recesses need to be provided in the cargo floor to ensure the presence of at least one local protrusion on all sides of the pallet or the item of cargo. This means that the cargo floor is at least partially weakened, but especially that a large number of anti-slip strips are needed, causing the costs to rapidly increase. In addition, it takes more time to install the anti-slip device in the cargo floor.

The present invention aims to provide an anti-slip device for a cargo floor of a cargo space of a truck or trailer wherein damaged anti-slip elements can easily be replaced.

This aim is achieved by means of a anti-slip device for a cargo floor of a cargo space of a truck or trailer, said cargo floor having a top face arranged for supporting goods, wherein the anti-slip device comprises: a gutter section having two upright side walls, wherein said gutter section is configured to be built into the cargo floor; a cover being removably mounted to the side walls of the gutter section and comprising a plurality of openings, said cover having a top face configured to form part of the top face of the cargo floor; a plurality of platelike anti-slip elements located in said openings and having a top face configured to form part of the top face of the cargo floor; one or more elements that are slidable upward and downward, onto which the plurality of anti-slip elements are mounted, said slidable elements having a lowered position in which the anti-slip elements do not protrude above the top face of the cover and an raised position in which the anti-slip elements protrude above the top face of the cover, which lowered position is defined by a first stop for the slidable elements and which raised position is defined by a second stop for the slidable elements; and a pneumatic inflatable air hose positioned between the gutter section and the slidable elements and configured for moving the slidable elements up and down, said air hose having a deflated state in which the slidable elements abut against said first stop and an inflated state in which the slidable elements abut against said second stop.

The construction of the anti-slip device of the present invention entails that a plurality of anti-slip elements are mounted onto upward and downward slidable elements that can be shifted, by means of a pneumatic inflatable air hose , between a lowered position and an raised position. In the lowered position, the anti-slip elements are located below the top face of the cargo floor, so that they cannot become detached during loading or unloading of the cargo space. In the raised position, the anti-slip elements are located above the top face of the cargo floor, so that the frictional force between the cargo and the cargo floor is increased.

A damaged anti-slip element can easily be replaced in two different ways. The damaged anti-slip element can be detached from the slidable element onto which it is mounted and be replaced. Alternatively, the cover can be detached from the gutter section, after which the slidable element on which the damaged anti-slip element is located can be replaced as a whole. Both methods enable a targeted replacement of the damaged anti-slip elements without the need for replacing the air hose along with it, contrary to the known anti-slip devices described in DE-A-100 13 972 and DE-A-10 2007 061 821.

Furthermore, due to the anti-slip elements being mounted onto the slidable elements, contrary to the anti-slip devices described in DE-A-100 13 972 and DE-A-10 2007 061 821, the material of the anti-slip elements does not need to be deformed in order to protrude above the cargo floor. As a result, it is not necessary to use inflatable materials for the anti-slip elements, which, as described above, leads to several problems. In particular, anti-slip elements complying with the standard "VDI 2700 Blatt 15 - May 2009" may be used.

Furthermore, the construction of the anti-slip device ensures that the air hose is at all times constricted during inflation. Specifically, the air hose is positioned between the gutter section, which forms a fixed wall, and the slidable elements, which are limited in height by the second stop. This allows a less extensively reinforced, and thus cheaper air hose to be used, if so desired, without the risk of an accidental pneumatic overpressure in the air hose leading to overstretching the wall of the air hose.

Restricting the lowered position of the slidable elements by means of the first stop allows the anti-slip elements that are mounted onto the slidable elements to be provided as closely as possible below the top face of the cover in the lowered position. For instance, by choosing the thickness of the anti-slip elements in a suitable way, or by choosing the thickness of the slidable elements in a suitable way, or by choosing the position of the first stop in a suitable way. The benefit of this is that there is substantially no difference in height between the top face of the anti-slip elements and the top face of the cover, which decreases the number of grooves and/or ridges in the cargo floor, which in turn facilitates the loading and unloading.

An anti-slip device having elements that are slidable upward and downward relative to each other is already known as such for use in cargo spaces of a passenger vehicle, as described in US-A-2007/212184. The device comprises a fixed top face having an upward and downward slidable plate underneath. The top face is provided with a plurality of openings, in particular elongated slots, and the slidable plate is provided with a plurality of elastomeric anti-slip elements. One or more jack screws are used to move the slidable plate up and down. In this way, it is possible, after the goods have been loaded, to move the slidable plate upward so that the goods are supported on the anti-slip elements and therefore cannot shift during transport. The fixed top face typically has a low friction so that loading and unloading of the goods can easily be achieved by sliding them over the top face.

However, such an anti-slip device is not suited for the cargo space of a truck or trailer. In particular, a large number of jack screws would be required, distributed throughout the cargo floor of the cargo space, to allow the slidable plate to be slid upward under the total weight of the goods, which can easily amount to several tons. The cost of such a system for a truck or trailer is therefore not commercially acceptable.

Moreover, the slidable plate should be sufficiently sturdy, in particular sufficiently thick, so that it will not bend under the weight of the goods. However, the total height of the anti-slip device is preferably limited, to keep the usable volume of the cargo space as high as possible, and likewise the weight of the anti-slip device should be as low as possible. A sufficiently thick slidable plate is, however, difficult to combine with a limited height and/or a limited weight of the anti-slip device.

In addition, the anti-slip device disclosed in US-A-2007/212184 is intended for lifting the goods from the cargo floor. In freight transport, however, this is not desired. Typically, the goods are strapped against the cargo floor using tie-down straps. An anti-slip device lifting the goods may thus damage the goods or the tie-down straps, depending on the type of goods and the tensile force of the tie-down straps.

In an embodiment of the present invention, the slidable elements are provided with a bottom configured to at least partly form a contact surface with the air hose in its inflated state, wherein the contact surfaces of the slidable elements have a first total surface area and wherein the top faces of anti-slip elements have a second total surface area, which second total surface area is at least 30 %, preferably at least 40 %, and at most 70 %, preferably at most 60 % of the first total surface area.

In an embodiment of the present invention, the air hose comprises an outer wall enclosing at least one hollow chamber, which hollow chamber extends throughout the air hose, wherein the hollow chamber is configured to be pressurized, in the inflated state of the air hose, at a pressure of at least 75 kPa, preferably at least 100 kPa and more preferably at least 125 kPa, and at most 300 kPa, preferably at most 250 kPa and more preferably at most 200 kPa.

In case an item of cargo is located on the cargo floor, the maximum lateral force to be exerted onto said item of cargo before it starts to slide is typically directly proportional to the normal force exerted onto the contact surface of the item of cargo and the cargo floor. That normal force is partly determined by the force exerted by the anti-slip elements onto the goods if the air hose is in the inflated state. Hence, the force exerted by the anti-slip elements onto the goods is ideally as high as possible. However, if the force exerted becomes too high, specifically exceeding the force of gravity acting on the goods combined with the force exerted by the tie-down straps, the goods will be moved upward. This may, as already described above, cause the tie-down straps and/or the goods to be damaged. The force exerted by the anti-slip elements onto the goods should therefore not become too high. Further accounts should be taken of the fact that the surface area of the anti-slip elements has a lower limit, as anti-slip elements that are too small may locally exert such a high pressure onto the goods such that the goods or the pallet on which the goods are located may be damaged.

It was found that the embodiments described above are highly suited to meet these conflicting conditions. In particular, the ratio of the second total surface area to the first total surface area determines the force exerted onto the goods by the pressure in the air hose. It was found that such a ratio makes it possible, at relatively low pressures, to still generate sufficient force to increase static friction without thereby lifting the cargo from the cargo floor. Furthermore, the lower limit of the second total surface area is preferably dependent on the surface area of the top face of the air hose in its inflated state, so that anti-slip elements having a too small surface area, and thus a too high pressure, will not occur.

In an embodiment of the present invention, the slidable elements are provided with upright side walls in which a recess is provided that forms a female guide part, wherein the side walls of the gutter section are provided with one or more male guide parts, and wherein the male and female guide parts are configured to prevent a longitudinal shift of the slidable elements in relation to the gutter section.

Providing male and female guide parts on the slidable elements and the gutter section prevents the anti-slip elements that are mounted onto the slidable elements from sliding along the gutter section. Such sliding would cause the anti-slip elements to press against the cover, or even to no longer be located entirely inside their openings, as a result of which that part of them can no longer be slid upward to increase friction.

In an embodiment of the present invention, a shortest distance between two consecutive openings of said plurality of openings is at least 30 mm, preferably at least 60 mm and more preferably at least 80 mm, and at most 300 mm, preferably at most 200 mm and more preferably at most 120 mm.

Such a lower limit for the shortest distance allows a sufficiently sturdy cover to be used which allows for conventional equipment for loading and unloading a cargo space, such as for instance a pallet truck or a forklift, to be supported on the cover between consecutive openings. Such an upper limit for the shortest distance prevents the placement of pallets, in particular EUR-pallets, that are not supported on a anti-slip element. EUR-pallets have only three legs resting on the cargo floor, as a result of which, especially with large distances between consecutive openings, and thus between anti-slip elements, the legs may end up between the anti-slip elements.

In an embodiment of the present invention, the slidable elements are provided with upright side walls, wherein a free end of the upright side walls, in the deflated state of the air hose, is supported on the gutter section, in particular on a bottom thereof, so that the gutter section constitutes said first stop.

In an embodiment of the present invention, the slidable elements are provided with a top surface that is larger than an opening from said plurality of openings, wherein the top surface in the inflated state of the air hose contacts the cover so that the cover constitutes said second stop.

In these embodiments, no additional parts are needed for setting up the anti-slip device so as to form the stops. In other words, these embodiments allow the stops to be formed without any added complexity or weight. Furthermore, this also minimizes the total height of the anti-slip device, which, as already described above, is desirable for the cargo floor in a truck or trailer.

In an embodiment of the present invention, the number of slidable elements equals the number of openings, wherein, for each opening of said plurality of openings, one slidable element is provided onto which at least one, in particular one, anti-slip element is mounted.

Thus, in this embodiment, there is a one-on-one relationship between the openings and the slidable elements. In other words, the various slidable elements are independent from each other, as a result of which, adjacent goods have virtually no influence on one another's anti-slip element.

In an alternative embodiment of the present invention, the anti-slip device comprises only one upward and downward slidable element, which, for each opening of said plurality of openings, is provided with at least one first guide part, wherein the anti-slip device further, for each opening of said plurality of openings, comprises an intermediate element onto which at least one, in particular one, anti-slip element is mounted, said intermediate element being provided with at least one second guide part, wherein the first and the second guide parts are configured to prevent a longitudinal shift of an intermediate element in relation to the slidable element.

Although this alternative embodiment has a more complicated construction due to the first and the second guide parts providing an alignment of the intermediate elements with the openings in the cover, the use of only one common slidable element ensures a better pressure equalization.

In an embodiment of the present invention, one or more of the gutter section, the cover and the slidable elements are extruded from metal, in particular from aluminum. Such operations are known in that they allow a rapid and low-cost production of the anti-slip device.

In an embodiment of the present invention, the air hose has a first end provided with an inlet and a second end which is substantially closed, wherein the anti-slip device comprises a pneumatic actuator which is connected to said inlet and is configured to pneumatically inflate the air hose from its deflated state to its inflated state. Preferably, the pneumatic actuator is suited for generating a pressure within the air hose, said pressure being at least 75 kPa, preferably at least 100 kPa and more preferably at least 125 kPa, and at most 300 kPa, preferably at most 250 kPa and more preferably at most 200 kPa.

Coupling the pneumatic actuator to an end of the air hose is advantageous as, in the construction of the anti-slip device, the ends are substantially freely accessible.

In an embodiment of the present invention, a shortest distance between the top face of the anti-slip elements in the lowered position of the slidable elements and the top face of the anti-slip elements in the raised position of the slidable elements is at least 2.5 mm, preferably at least 3.5 mm, and at most 6 mm, preferably at most 4.5 mm.

It has been found that such a small displacement of the slidable elements can be realized using a relatively low-cost air hose and at a relatively low pressure, so that a relatively low-cost pneumatic actuator can be used.

In an embodiment of the present invention, a shortest distance between the top face of the cover and a bottom of the gutter section is at most 50 mm, preferably at most 40 mm, more preferably at most 35 mm and most preferably at most 30 mm.

It has been found that, for such an embodiment, the anti-slip device can be incorporated into existing cargo floors without thereby decreasing the volume of the cargo space.

The aim of the invention is also realized by a cargo floor for a cargo space of a truck or trailer, said cargo floor having a top face that is configured for supporting goods and a longitudinal direction that, in use, substantially coincides with a driving direction of the truck or trailer, wherein the cargo floor comprises at least two elongated recesses extending over substantially the entire length of the cargo floor in said longitudinal direction, and in which an anti-slip device as described above is placed.

The advantages of the anti-slip device described above also apply to the cargo floor.

In an embodiment of the present invention, the top face of the cover substantially coincides with the top face of the cargo floor, so that the anti-slip devices are recessed into the cargo floor.

Having the top faces of the covers and those of the cargo floor substantially coincide, and optionally the top faces of anti-slip elements as well, allows a virtually substantially smooth cargo floor to be obtained, which simplifies and especially speeds up loading and unloading, as there are few or even no ridges and/or grooves present in the cargo floor.

The aim of the invention is also realized by a truck or trailer having a cargo space comprising a cargo floor as described above.

The advantages of the cargo floor described above also apply to the truck or trailer.

The aim of the invention is also realized by a construction kit for constructing an anti-slip device as described above, said construction kit comprising: the gutter section, the cover, one or more upward and downward slidable elements onto which the plurality of anti-slip elements are mounted, and the pneumatic inflatable air hose .

The construction kit allows the construction of a anti-slip device according to the present invention.

The invention will hereafter be further elucidated by means of the following description and the appended figures.
Figure 1 shows a cargo space of a trailer provided with four anti-slip devices according to the present invention.
Figure 2 shows an exploded view of an anti-slip device according to the present invention.
Figure 3 shows a detail of figure 2.
Figure 4A shows an end of the anti-slip device of figure 2 wherein a portion of the cover plate and the internal elements have been omitted.
Figure 4B shows an identical view as figure 4A, in which, however, only those slidable elements having the anti-slip elements thereon have been omitted.
Figures 5A and 5B show an end of the anti-slip device of figure 2 wherein a portion of the cover plate has been omitted in the deflated state and in the inflated state of the air hose, respectively.
Figures 6A and 6B show a cross-section through the anti-slip device of figure 2 in the deflated state and in the inflated state of the air hose, respectively.
Figure 7 shows an exploded view of an alternative anti-slip device according to the present invention.

The present invention will be described with respect to particular embodiments and with reference to certain drawings but the invention is not limited thereto, and is only defined by the claims. The drawings described are only schematic depictions and are non-limiting. In the drawings, the dimensions of some of the elements may be exaggerated, meaning that they are not drawn to scale, being intended only for illustrative purposes. The dimensions and relative dimensions do not necessarily correspond to actual reductions to practice of the invention.

Furthermore, terms such as "first", "second", "third" and the like, in the description and in the claims, are used for distinguishing between similar elements and not necessarily for describing a sequential or chronological order. The terms are interchangeable under appropriate circumstances and the embodiments of the invention can operate in other sequences than those described or illustrated here.

Moreover, terms such as "top", "bottom", "over", "under" and the like, in the description and the claims, are used for descriptive purposes. The terms so used are interchangeable under appropriate circumstances and the embodiments of the invention described can operate in other orientations than those described or illustrated here.

The term "comprising" and derivative terms, as used in the claims, should not be interpreted as being restricted to the means listed thereafter; the term does not exclude other elements or steps. It should be interpreted as specifying the presence of the stated features, integers, steps or components as referred to, without, however, precluding the presence or addition of one or more other features, integers, steps or components, or groups thereof. Thus, the scope of an expression such as "a device comprising means A and B" is not limited to devices consisting only of components A and B. What is meant, in contrast, is that with respect to the present invention, the only relevant components of the device are A and B.

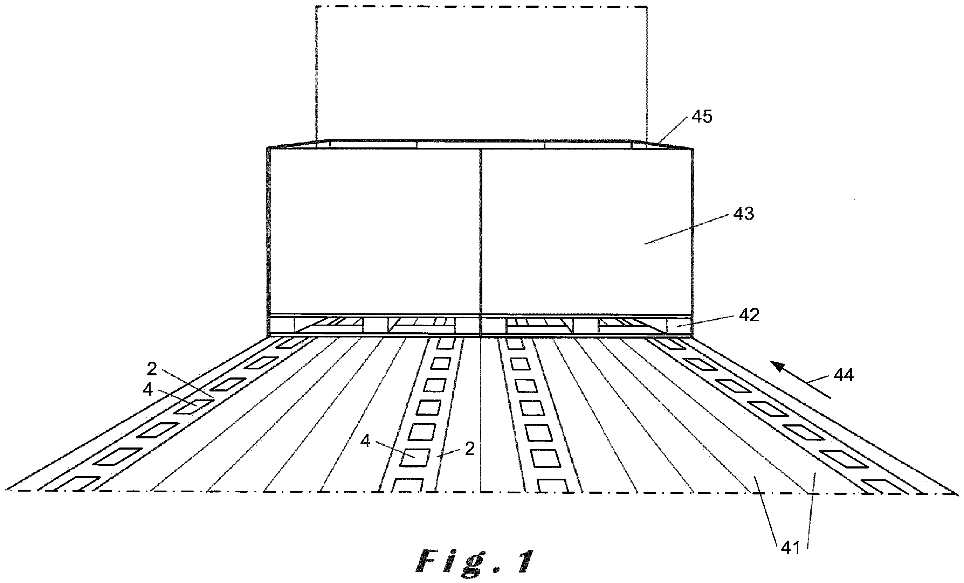

Figure 1 illustrates a cargo floor of a cargo space of a truck or trailer in which the side walls are omitted. Such a cargo floor is typically constructed by mounting boards 41 onto a supporting frame (not shown), for instance by screwing them onto the frame. The boards 41 may be constructed from various materials, including wood, metal or plastic. Pallets 42 having goods 43 thereon are placed on the cargo floor, in other words on the top faces of the boards 41, said goods 43 typically being strapped against the cargo floor by means of tie-down straps 45. In the embodiment shown, EUR-pallets 42 are used, as these are an industrial standard in the field of cargo transport. However, the present invention is not limited to the use of EUR-pallets, nor to the use of pallets and/or tie-down straps for transporting goods.

The cargo floor is provided with four anti-slip devices which, as described in further detail below, prevent the pallets 42 from sliding during transport by locally increasing the static frictional force between the pallets 42 and the cargo floor. In particular, the anti-slip devices are arranged in the longitudinal direction 44 of the cargo floor, which longitudinal direction corresponds to the driving direction of the truck or trailer on which the cargo space is located. Such an orientation is advantageous as only a limited number of anti-slip devices are needed in this way to span the entire cargo floor, contrary to, for instance, a transversal orientation.

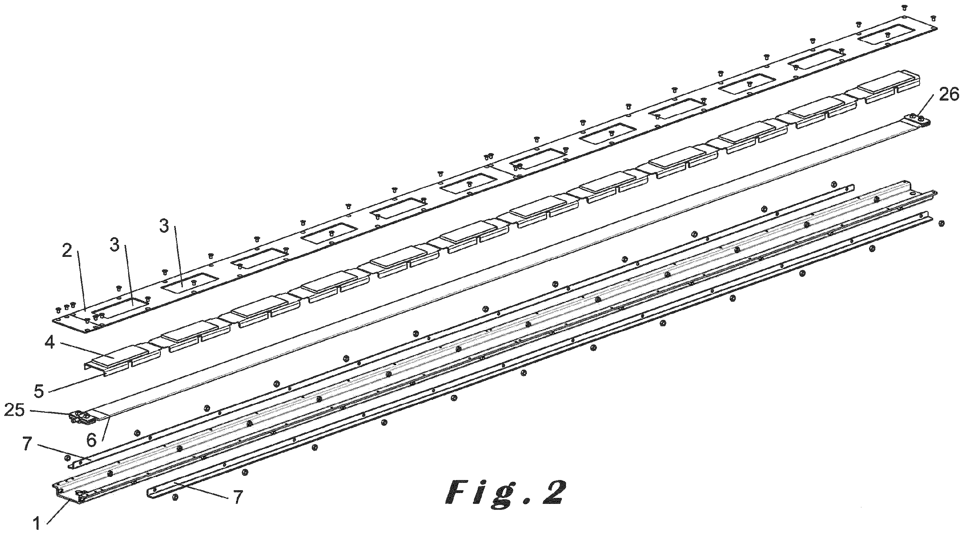

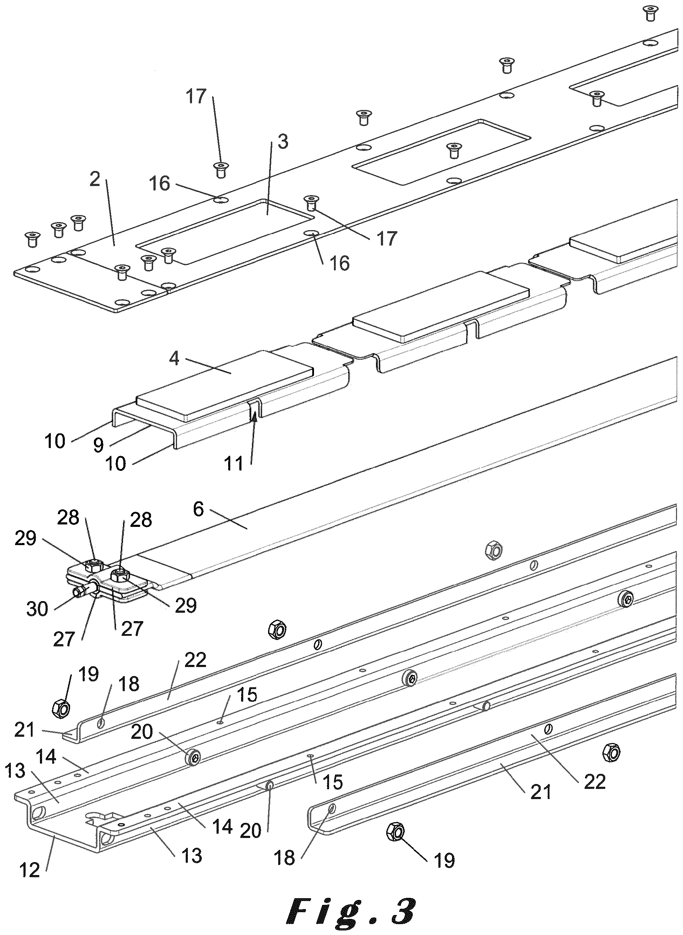

The construction of the anti-slip device will be described in reference to figures 2 and 3, wherein figure 2 shows an exploded view of one of the anti-slip devices present in the cargo floor of figure 1 and wherein figure 3 shows one end of the exploded view of figure 2 in more detail.

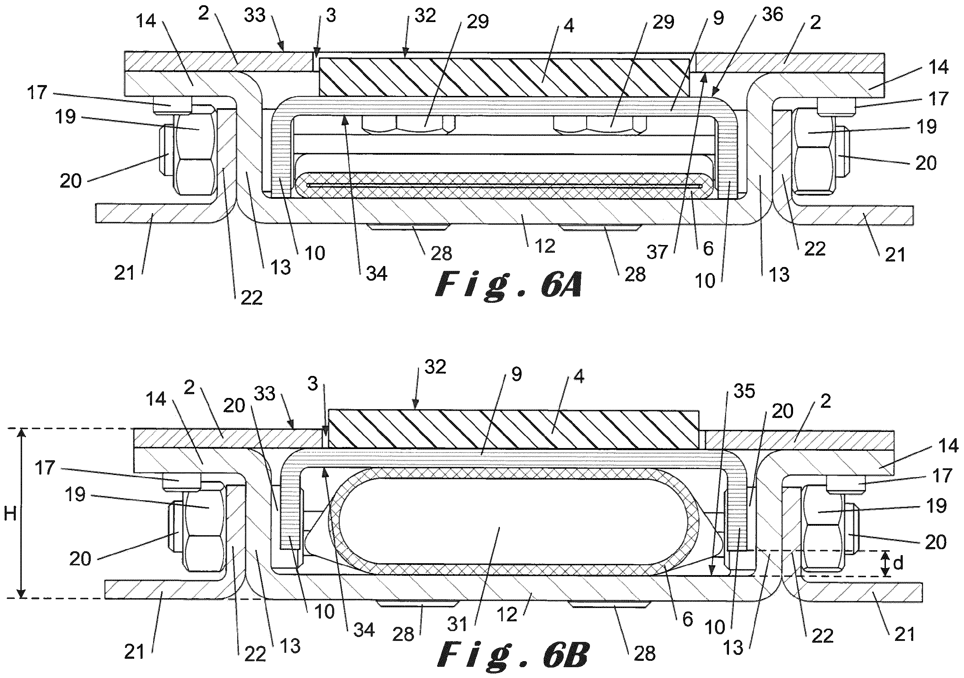

The anti-slip device comprises a gutter section 1 having a bottom 12 and two upright side walls 13. The gutter section 1, as shown in figure 1, is built into the cargo floor and is preferably recessed into it, so that the gutter section 1 does not form a ridge in the cargo floor, which ridge would make loading and unloading of the goods more difficult. The upright walls 13 are provided at their free end with a projecting wall 14 onto which a cover 2 can be mounted, said cover 2 having a top face 33 (indicated in figures 6A and 6B) which, as shown in figure 1, is part of the top face of the cargo floor.

For mounting the cover 2 onto the gutter section 1, the cover 2 is provided with a plurality of mounting openings 16, and the projecting walls 14 are provided with a corresponding plurality of mounting openings 15 so that the cover is mounted to the projecting walls 14 by means of screws 17. In this way, the cover 2 is removably mounted to the gutter section 1. It will be appreciated that the cover 2 can also be mounted, removably or not, to the upright walls 13 of the gutter section 1 in other ways, for instance by providing openings directly in the upright walls 13 so that there is no need to provide projecting walls 14. The cover 2 may also be provided with curved edges so that it can be mounted in a sliding way in a longitudinal direction of the gutter section 1, wherein the projecting walls 14 fit in the curved edges of the cover 2 and there is therefore no need to provide mounting openings 15, 16 and screws 17.

For mounting the gutter section 1 to the cargo floor, two L-shaped profiles 7 are provided. The L-shaped profiles 7 are provided with mounting openings 18 in their upright leg 22, wherein the upright side walls 13 of the gutter section 1 are provided with a corresponding number of mounting openings (not shown) through which a screw 20 can be inserted. The screws 20 thus also extend through the mounting openings 18 so that a nut 19 is suited for securing the L-shaped profiles 7 to the gutter section 1. The horizontal leg 21 of the L-shaped profiles 7 can be mounted to the cargo floor, for instance to its frame. In the embodiments shown, the horizontal legs 21 of the L-shaped profiles 7 protrude further outward than the cover 2 (see figures 6A and 6B), which allows the boards 41 forming the top face of the cargo floor to be supported on the horizontal legs 21 of the L-shaped profiles 7. It will be appreciated that the gutter section 1 can also be mounted in other ways to the cargo floor 41, in particular without using the illustrated L-shaped profiles 7.

The cover 2 is further provided with a plurality of substantially rectangular openings 3 in which a corresponding number of platelike anti-slip elements 4 are located. The anti-slip elements 4, in the embodiment of figures 2 to 6B, are mounted to separate upward and downward slidable elements 5, in other words, the anti-slip elements 4 are each mounted to their respective upward and downward slidable elements 5, which, as described below, are actuated together between their lowered positions (see figure 6A), in which the anti-slip elements 4 do not protrude above the cover 2, and their raised positions (see figure 6B), in which the anti-slip elements 4 do protrude above the cover 2. The anti-slip elements 4 have a top face 32 (indicated in figures 6A and 6B) which, as shown in figure 1, is part of the top face of the cargo floor.

It will be appreciated that the design of the openings 3 and the anti-slip elements 4 can vary according to the embodiment. In particular, other shapes may be used, such as circular, triangular, quadrangular, elliptic, etc. Likewise, several anti-slip elements may fit into one and the same opening together, for instance if each platelike anti-slip element is divided into a plurality of smaller cubes or cylinders that are mounted to one of the slidable elements together.

The anti-slip mats 4 preferably comply with the standard "VDI 2700 Blatt 15 - May 2009". Such anti-slip mats 4 typically have a tensile strength of at least 0.6 N/mm², preferably at least 0.8 N/mm², and a load capacity of at least 150 ton/m², preferably at least 250 ton/m². The anti-slip mats 4 typically comprise crumb rubber bound with polyurethane, with a typical density of between 900 and 1100 kg/m³. The static coefficient of friction is typically at least 0.6 in dry conditions. The anti-slip mats 4 often have a thickness between 3 mm and 10 mm.

The slidable elements 5 are constructed as inverted gutter sections having a top 9 and two upright side walls 10. In the side walls 10, a recess 11 is provided, in which the heads of the screws 20 fit as shown in figures 6A and 6B. Such a construction prevents the slidable elements 5 from sliding in relation to the gutter section 1 and the cover 2 in their longitudinal direction. Moreover, the distance between the upright side walls 13 of the gutter section 1 and the distance between the upright side walls 10 of the slidable elements 5 is substantially the same so that, as shown in figures 6A and 6B, there is a minimal gap between corresponding side walls 10, 13. In other words, this prevents the slidable elements 5 from sliding in relation to the gutter section 1 and the cover 2 in their transversal direction. These two features thus ensure that the slidable elements 5 having the anti-slip elements 4 thereon are substantially unable to slide horizontally in relation to the cover 2, causing the anti-slip elements 4 and the openings 3 in the cover 2 to remain mutually aligned.

The anti-slip device further comprises a pneumatic inflatable air hose 6 positioned between the gutter section 1 and the slidable elements 5. The air hose 6 has a first end 25 sandwiched between two plates 27, said plates 27 being interconnected by means of screws 28 and nuts 29. The plates 27 have a circular part, so that a coupling 30 can be placed into the air hose 6, said coupling 30 being intended to be connected to a pneumatic actuator (not shown). Such actuators are typically part of a truck or trailer, since these usually contain other systems driven by air pressure, for instance a suspension. A second end 26 of the air hose 6 is closed off, in particular by sandwiching the air hose 6 between two plates connected by means of screws 28 and nuts 29.

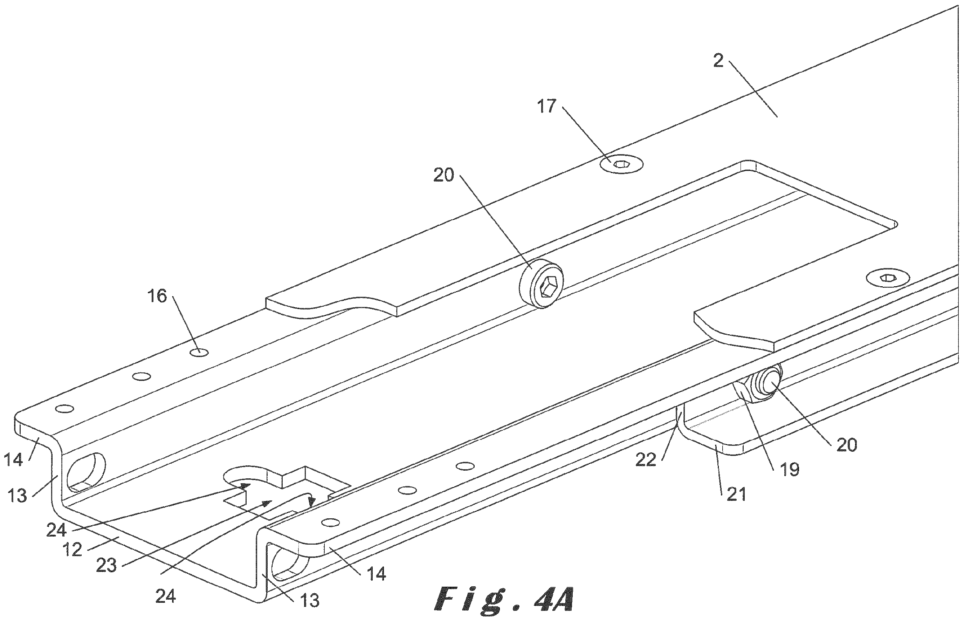

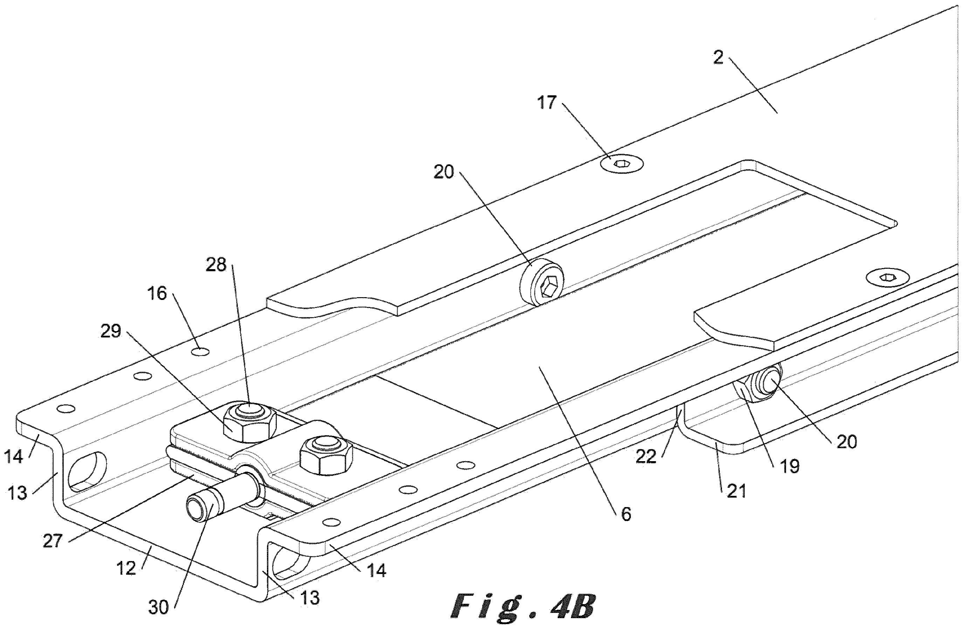

As shown in more detail in figure 4A, a recess is provided in the bottom 12 of the gutter section 1 for the first end 25 of the air hose 6. The recess comprises a central part 23 for receiving the circular part of the bottom plate 27 and two side parts 24 for receiving a head (not shown) of the screws 28. Such a recess 23, 24 allows the coupling 30 to be given a diameter that is as large as possible, without thereby having to increase the total height of the anti-slip device. Such a recess is not provided in the cover 2, in order to limit the number of openings in the cargo floor. Figure 4B illustrates how the first end 25 of the air hose 6 fits into the recess 23, 24 in the bottom 12 of the gutter section 1.

One or more of the different profiles, including the gutter section 1, the cover 2, the L-shaped profiles 7, and the slidable elements 5, are preferably extruded from metal, in particular from aluminum. Alternatively, one or more of these profiles are formed by folding them from metal plates and cut, in particular punched, which allows a rapid and simple production. Moreover, it is possible to construct one or more of the profiles from multiple parts, as is the case for the cover 2 in the embodiment shown, which comprises three cover parts in total.

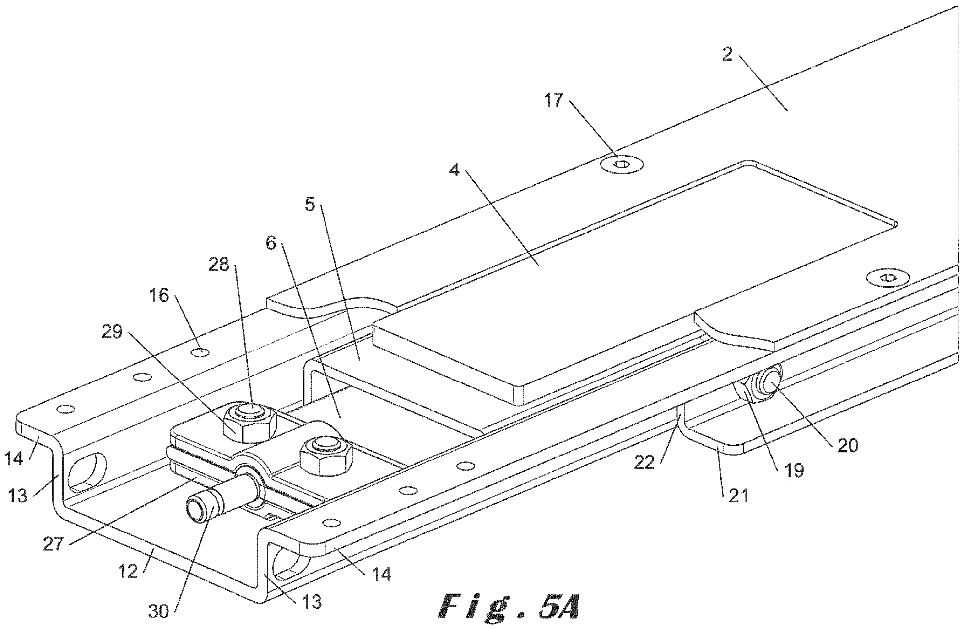

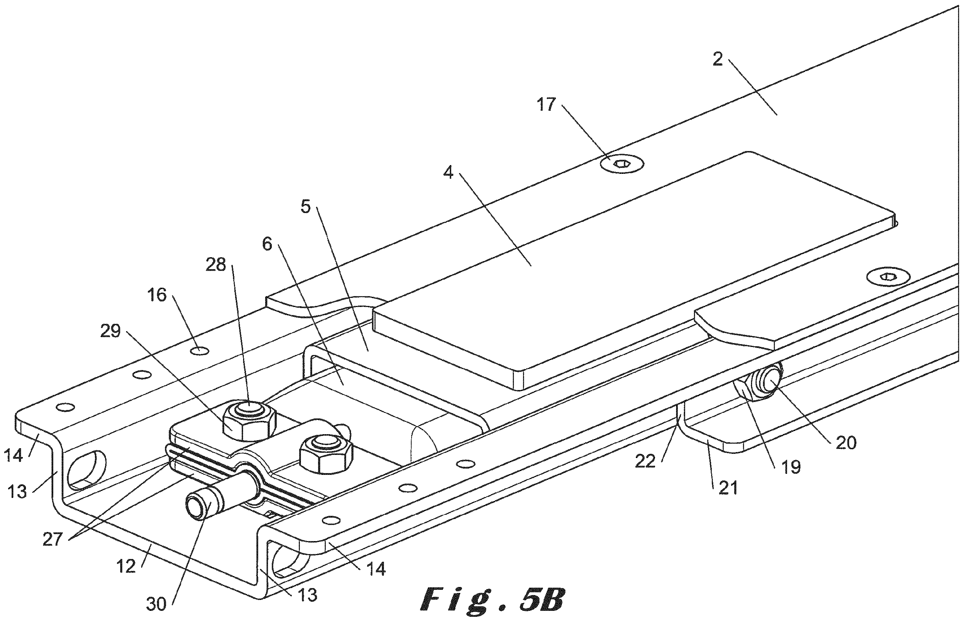

The operation of the anti-slip device will be described in reference to figures 5A to 6B, wherein figures 5A and 5B show an end of the anti-slip device from which a portion of the cover plate has been omitted, in the deflated state and in the inflated state of the air hose, respectively, and wherein figures 6A and 6B show a cross-section through the anti-slip device, in the deflated state and in the inflated state of the air hose, respectively.

In the deflated state of the air hose 6, as shown in figures 5A and 6A, the slidable elements 5 are supported by means of their side walls 10 on the top face 35 of the bottom 12 of the gutter section 1. In other words, the bottom 12 of the gutter section 1 forms an stop for the slidable elements 5 in their lowered position. It will be appreciated that, in other embodiments, such a lower stop may also be constituted by horizontally projecting walls extending inward from the side walls 13 of the gutter section 1, although this results in a more complicated construction. Likewise, an additional profile could be provided within the gutter section 1 against which the slidable elements 5 would abut in their lowered position, which would, however, increase the total height of the anti-slip device, which is not desirable.

In the inflated state of the air hose 6, the latter, in particular its outer wall, which is pressurized by inflating the hollow chamber 31 within the air hose 6, presses against the bottom face 34 of the slidable elements 5, causing them to move upward, and thus causing the anti-slip elements 4 to also move upward. The slidable elements 5 have a top face 36 (indicated in figure 6A) that is larger than a corresponding opening 3 in the cover 2. As a result, the slidable elements 5, in the inflated state of the air hose 6 as shown in figures 5B and 6B, press against the bottom 37 of the cover 2. In other words, the bottom 37 of the cover 2 forms a stop for the slidable elements 5 in their raised position. It will be appreciated that, in other embodiments, such an upper stop may also be constituted by horizontally projecting walls extending inward from the side walls 13 of the gutter section 1, although this results in a more complicated construction. Likewise, an additional profile could be provided within the gutter section 1 against which the slidable elements 5 would abut in their raised position, which would, however, increase the total height of the anti-slip device, which is not desirable.

Preferably, the total height H (indicated in figure 6A and measured between the top face 33 of the cover 2 and the underside of the bottom 12 of the gutter section 1) of the anti-slip device is limited, where in particular the height H is at most 50 mm, preferably at most 40 mm, more preferably at most 35 mm, and most preferably at most 30 mm. In this way, the anti-slip device can be incorporated into existing cargo floors without thereby decreasing the volume of the cargo space.

Preferably, a shortest distance between the top face 32 of the anti-slip elements 4 in the lowered position of the slidable elements 5 and the top face 32 of the anti-slip elements 4 in the raised position of the slidable elements 5 is at least 2.5 mm, preferably at least 3.5 mm, and at most 6 mm, preferably at most 4.5 mm. This distance corresponds, in the embodiment shown, to the distance d between the top face 35 of the bottom 12 of the gutter section 1 and the free end of the side walls 10 of the slidable elements 5, and is indicated in figure 6B. Such a small displacement of the slidable elements 5 can be realized using a relatively low-cost air hose 6 and at a relatively low pressure, so that a relatively low-cost pneumatic actuator can be used.

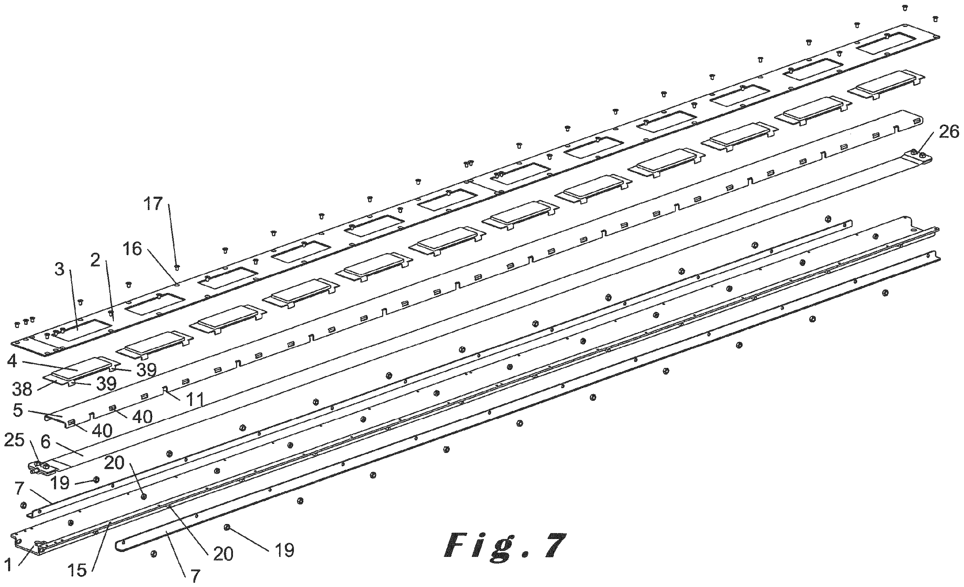

Figure 7 illustrates an alternative embodiment of the anti-slip device. Both the gutter section 1 and the cover 2 and the air hose 6 are identical to the described embodiment above. However, in this embodiment, there is only one slidable element 5. The anti-slip elements 4 are then each mounted to a separate intermediate element 38, which is supported on the slidable element 5. The advantage of using only one slidable element 5 is that the contact surface with the air hose 6 is maximized, leading to a better pressure equalization. The slidable element 5 is provided with recesses 11 in which the heads of the screws 20 fit, so that no sliding is possible in relation to the gutter section 1 and the cover 2 in the longitudinal direction thereof. Moreover, the upright side walls 10 of the slidable element 5 prevent sliding in relation to the cover 2 in their transversal direction. To prevent the anti-slip elements 4 from sliding in relation to the one slidable element 5, mating male 39 and female 40 elements are provided. These features thus ensure that the slidable element 5 provided with the intermediate elements 38 having the anti-slip elements 4 thereon are substantially unable to slide horizontally in relation to the cover 2, causing the anti-slip elements 4 and the openings 3 in the cover 2 to remain mutually aligned.

As before, the bottom 12 of the gutter section 1 forms a stop for the slidable element 5 in its lowered position. The upper stop is also formed by the bottom 37 of the cover 2 against which the intermediate elements 5 abut, so that an upward movement of the slidable element 5 is limited.

In another alternative embodiment, not shown, the intermediate elements 38 are absent and the anti-slip elements 4 are directly mounted to the one slidable element 5. This limits the height of the anti-slip device and ensures a simpler construction, however, in case one of the anti-slip elements 4 needs to be replaced, the entire slidable element 5 will need to be replaced.

In the embodiments shown, a total surface area of the top face 32 of the anti-slip elements 4 is at least 30 %, preferably at least 40 %, of the first total surface area and at most 70 %, preferably at most 60 %, of the surface area of the contact surface between the bottom 34 of the slidable elements 5 (or the slidable element 5) and the air hose 6 in its inflated condition. Furthermore, the air hose 6 is arranged to be under pressure, said pressure being at least 75 kPa, preferably at least 100 kPa and more preferably at least 125 kPa and at most 300 kPa, preferably at most 250 kPa and more preferably at most 200 kPa. As above, these measures allow the frictional force between the anti-slip elements 4 and the goods positioned thereon (optionally with pallets) to be raised sufficiently without thereby lifting the goods from the cargo floor and without thereby exerting an excessive pressure force onto the goods, possibly causing them to be damaged.

Although certain aspects of the present invention have been described in reference to specific embodiments, is should be clear that these aspects may be implemented in other forms within the scope of the invention as defined by the claims.

## Claims

1. An anti-slip device for a cargo floor of a cargo space of a truck or trailer, said cargo floor having a top face arranged for supporting goods (43), wherein the anti-slip device comprises:
- a gutter section (1) having two upright side walls (13), said gutter section (1) being configured to be embedded in the cargo floor;
- a cover (2) which is removably mounted to the side walls (13) of the gutter section (1) and comprises a plurality of openings (3), said cover (2) having a top face (33) configured to form part of the top face of the cargo floor;
- a plurality of platelike anti-slip elements (4) located in said openings (3) and having a top face (32) configured to form part of the top face of the cargo floor;
- one or more upward and downward slidable elements (5) onto which the plurality of anti-slip elements (4) are mounted, said slidable elements (5) having a lowered position in which the anti-slip elements (4) do not protrude above the top face (33) of the cover (2), and a raised position in which the anti-slip elements (4) protrude above the top face (33) of the cover (2), said lowered position being defined by a first stop for the slidable elements (5) and said raised position being defined by a second stop for the slidable elements (5); and
- a pneumatic inflatable air hose (6) positioned between the gutter section (1) and the slidable elements (5) and configured for moving the slidable elements up and down (5), said air hose (6) having a deflated state in which the slidable elements (5) abut against said first stop and an inflated state in which the slidable elements (5) abut against said second stop.

2. The anti-slip device according to claim 1, wherein the slidable elements (5) have a bottom (34) configured to at least partly form a contact surface with the air hose (6) in its inflated state, wherein the contact surfaces of the slidable elements (5) have a first total surface area and wherein the top faces (32) of anti-slip elements (4) have a second total surface area, said second total surface area being at least 30 %, preferably at least 40 %, and at most 70 %, preferably at most 60 % of the first total surface area.

3. The anti-slip device according to claim 1 or 2, wherein the air hose (6) comprises an outer wall enclosing at least one hollow chamber (31), said hollow chamber (31) extending throughout the air hose (6), wherein, in the inflated state of the air hose (6), the hollow chamber (31) is configured to be pressurized at a pressure of at least 75 kPa, preferably at least 100 kPa and more preferably at least 125 kPa, and at most 300 kPa, preferably at most 250 kPa and more preferably at most 200 kPa.

4. The anti-slip device according to any of the preceding claims, wherein the slidable elements (5) have upright side walls (10) in which a recess (11) is provided forming a female guide part, wherein the side walls (13) of the gutter section (1) are provided with one or more male guide parts (20) and wherein the male and female guide parts (11, 20) are configured to prevent a longitudinal shift of the slidable elements (5) in relation to the gutter section (1).

5. The anti-slip device according to any of the preceding claims, wherein the slidable elements (5) have upright side walls (10) and wherein, in the deflated state of the air hose, a free end of the upright side walls (10) is supported on the gutter section (1), in particular on a bottom (12) thereof, so that the gutter section (1) forms said first stop.

6. The anti-slip device according to any of the preceding claims, wherein the slidable elements (5) have a top surface that is larger than an opening from said plurality of openings (3) and wherein, in the inflated state of the air hose, the top surface contacts the cover (2) so that the cover (2) forms said second stop.

7. The anti-slip device according to any of the preceding claims, wherein the number of slidable elements (5) equals the number of openings (3) and wherein, for each opening of said plurality of openings (3), one slidable element is provided onto which at least one, in particular one, anti-slip element is mounted.

8. The anti-slip device according to any of claims 1 to 6, wherein the anti-slip device comprises only one upward and downward slidable element, which, for each opening of said plurality of openings (3), is provided with at least one first guide part (40), wherein the anti-slip device further comprises, for each opening of said plurality of openings (3), an intermediate element (38) onto which at least one, in particular one, anti-slip element is mounted, said intermediate element (38) being provided with at least one second guide part (39), wherein the first and the second guide parts are configured to prevent a longitudinal shift of an intermediate element in relation to the slidable element.

9. The anti-slip device according to any of the preceding claims, wherein the air hose (6) has a first end (25) provided with an inlet (30) and a second end (26) which is substantially closed, and wherein the anti-slip device comprises a pneumatic actuator which is connected to said inlet (30) and is configured to pneumatically inflate the air hose (6) from its deflated state to its inflated state.

10. The anti-slip device according to any of the preceding claims, wherein the cover (2) comprises one or more covers, each having one or more of said plurality of openings (3).

11. A cargo floor for a cargo space of a truck or trailer, said cargo floor having a top face that is configured for supporting goods (43) and a longitudinal direction (44) that, in use, substantially coincides with a driving direction of the truck or trailer, wherein the cargo floor comprises at least two elongated recesses extending over substantially the entire length of the cargo floor in said longitudinal direction (44), and in which a anti-slip device according to any of the preceding claims is placed.

12. The cargo floor according to claim 11, wherein the top face of the cover (2) substantially coincides with the top face of the cargo floor so that the anti-slip devices are embedded into the cargo floor.

13. The cargo floor according to claim 11 or 12, wherein the cargo floor, for each anti-slip device, comprises a left L-shaped mounting profile (7) and a right L-shaped mounting profile (7), wherein a first leg (22) of the mounting profiles is secured to a respective one of the side walls (13) of the gutter section (1) and wherein a second leg (21) of the mounting profiles is secured to the cargo floor.

14. A truck or trailer having a cargo space comprising a cargo floor according to any of claims 11 to 13.

15. A construction kit for constructing an anti-slip device according to any of claims 1 to 10, said construction kit comprising: the gutter section (1), the cover (2), one or more upward and downward slidable elements (5) onto which the plurality of anti-slip elements (4) are mounted and the pneumatic inflatable air hose (6).

## Patentansprüche

1. Eine Antirutschvorrichtung für einen Laderaumboden eines Laderaums eines Lastkraftwagens oder Aufliegers, wobei der erwähnte Laderaumboden eine Oberseite hat, angeordnet, um Güter (43) zu tragen, wobei die Antirutschvorrichtung Folgendes umfasst:
- einen Rinnenabschnitt (1) mit zwei aufrechten Seitenwänden (13), wobei der erwähnte Rinnenabschnitt (1) konfiguriert ist, um in den Laderaumboden eingebettet zu sein;
- eine Abdeckung (2), die abnehmbar an den Seitenwänden (13) des Rinnenabschnitts (1) montiert ist und eine Vielzahl von Öffnungen (3) umfasst, wobei die erwähnte Abdeckung (2) eine Oberseite (33) hat, konfiguriert, um einen Teil der Oberfläche des Laderaumbodens zu bilden;
- eine Vielzahl von plattenähnlichen Antirutschelementen (4), die in den erwähnten Öffnungen (3) gelegen sind und eine Oberseite (32) haben, konfiguriert, um einen Teil der Oberseite des Laderaumbodens zu bilden;
- ein oder mehrere aufwärts und abwärts verschiebbare Elemente (5), auf denen die Vielzahl von Antirutschelementen (4) montiert sind, wobei die erwähnten verschiebbaren Elemente (5) eine abgesenkte Position haben, in der die Antirutschelemente (4) nicht über die Oberseite (33) der Abdeckung (2) hinausragen, und eine angehobene Position, in der die Antirutschelemente (4) über die Oberseite (33) der Abdeckung (2) hinausragen, wobei die erwähnte abgesenkte Position durch einen ersten Anschlag für die verschiebbaren Elemente (5) definiert ist und die erwähnte angehobene Position durch einen zweiten Anschlag für die verschiebbaren Elemente (5) definiert ist; und
- einen pneumatisch aufblasbaren Luftschlauch (6), positioniert zwischen dem Rinnenabschnitt (1) und den verschiebbaren Elementen (5) und konfiguriert, um die verschiebbaren Elemente (5) auf- und abzubewegen, wobei der erwähnte Luftschlauch (6) einen abgelassenen Stand hat, in dem die verschiebbaren Elemente (5) am erwähnten ersten Anschlag anliegen, und einen aufgeblasenen Stand, in dem die verschiebbaren Elemente (5) am erwähnten zweiten Anschlag anliegen.

2. Die Antirutschvorrichtung nach Anspruch 1, wobei die verschiebbaren Elemente (5) eine Unterseite (34) haben, konfiguriert, um zumindest teilweise eine Kontaktfläche mit dem Luftschlauch (6) in seinem aufgeblasenen Stand zu bilden, wobei die Kontaktflächen der verschiebbaren Elemente (5) eine erste gesamte Oberfläche haben und wobei die Oberseiten (32) von Antirutschelementen (4) eine zweite gesamte Oberfläche haben, wobei die erwähnte zweite gesamte Oberfläche mindestens 30 %, bevorzugt mindestens 40 %, und höchstens 70 %, bevorzugt höchstens 60 % von der ersten gesamten Oberfläche ausmacht.

3. Die Antirutschvorrichtung nach Anspruch 1 oder 2, wobei der Luftschlauch (6) eine Außenwand umfasst, welche zumindest eine Hohlkammer (31) umschließt, wobei sich die erwähnte Hohlkammer (31) durch den Luftschlauch (6) ausdehnt, worin die Hohlkammer (31) konfiguriert ist, um, im aufgeblasenen Stand des Luftschlauchs (6), unter einem Druck von mindestens 75 kPa, bevorzugt mindestens 100 kPa und noch besser mindestens 125 kPa, und höchstens 300 kPa, bevorzugt höchstens 250 kPa und noch besser höchstens 200 kPa zu stehen.

4. Die Antirutschvorrichtung nach irgendeinem der vorigen Ansprüche, wobei die verschiebbaren Elemente (5) aufrechte Seitenwände (10) haben, in denen eine Vertiefung (11) vorgesehen ist, die ein weibliches Führungsteil bildet, wobei die Seitenwände (13) des Rinnenabschnitts (1) mit einem oder mehreren männlichen Führungsteilen (20) versehen sind und wobei die männlichen und weiblichen Führungsteile (11, 20) konfiguriert sind, um eine Längsverschiebung der verschiebbaren Elemente (5) in Bezug zum Rinnenabschnitt (1) zu vermeiden.

5. Die Antirutschvorrichtung nach irgendeinem der vorigen Ansprüche, wobei die verschiebbaren Elemente (5) aufrechte Seitenwände (10) haben und wobei, im abgelassenen Stand des Luftschlauchs, ein freies Ende der aufrechten Seitenwände (10) auf dem Rinnenabschnitt (1) aufliegt, insbesondere auf einem Boden (12) davon, sodass der Rinnenabschnitt (1) den erwähnten ersten Anschlag bildet.

6. Die Antirutschvorrichtung nach irgendeinem der vorigen Ansprüche, wobei die verschiebbaren Elemente (5) eine obere Oberfläche haben, die größer als eine Öffnung der erwähnten Vielzahl von Öffnungen (3) ist, und wobei die obere Oberfläche, im aufgeblasenen Stand des Luftschlauchs, die Abdeckung (2) berührt, sodass die Abdeckung (2) den erwähnten zweiten Anschlag bildet.

7. Die Antirutschvorrichtung nach irgendeinem der vorigen Ansprüche, wobei die Anzahl von verschiebbaren Elementen (5) gleich der Anzahl von Öffnungen (3) ist und wobei, für jede Öffnung der erwähnten Vielzahl von Öffnungen (3), ein verschiebbares Element bereitgestellt ist, auf dem zumindest ein, insbesondere ein, Antirutschelement montiert ist.

8. Die Antirutschvorrichtung nach irgendeinem der Ansprüche 1 bis 6, wobei die Antirutschvorrichtung nur ein aufwärts und abwärts verschiebbares Element umfasst, das, für jede Öffnung der erwähnten Vielzahl von Öffnungen (3), mit zumindest einem ersten Führungsteil (40) versehen ist, wobei die Antirutschvorrichtung ferner, für jede Öffnung der erwähnten Vielzahl von Öffnungen (3), ein Zwischenelement (38) umfasst, auf dem zumindest ein, insbesondere ein, Antirutschelement montiert ist, wobei das erwähnte Zwischenelement (38) mit zumindest einem zweiten Führungsteil (39) versehen ist, wobei das erste und das zweite Führungsteil konfiguriert sind, um eine Längsverschiebung eines Zwischenelements in Bezug zum verschiebbaren Element zu verhindern.

9. Die Antirutschvorrichtung nach irgendeinem der vorigen Ansprüche, wobei der Luftschlauch (6) ein erstes Ende (25) hat, versehen mit einem Einlass (30), und ein zweites Ende (26), welches im Wesentlichen geschlossen ist, und wobei die Antirutschvorrichtung einen pneumatischen Betätiger umfasst, welcher mit dem erwähnten Einlass (30) verbunden ist und konfiguriert ist, um den Luftschlauch (6) pneumatisch aus seinem abgelassenen in seinen aufgeblasenen Stand aufzublasen.

10. Die Antirutschvorrichtung nach irgendeinem der vorigen Ansprüche, wobei die Abdeckung (2) eine oder mehrere Abdeckungen umfasst, die jeweils eine oder mehrere der erwähnten Vielzahl von Öffnungen (3) haben.

11. Ein Laderaumboden für einen Laderaum eines Lastkraftwagens oder Aufliegers, wobei der erwähnte Laderaumboden eine Oberseite hat, die konfiguriert ist, um Güter (43) zu tragen, und eine Längsrichtung (44), die, während des Gebrauchs, im Wesentlichen mit der Fahrtrichtung des Lastkraftwagens oder Aufliegers zusammenfällt, wobei der Laderaumboden zumindest zwei längliche Vertiefungen umfasst, die sich im Wesentlichen über die gesamte Länge des Laderaumbodens in die erwähnte Längsrichtung (44) erstrecken, und worin eine Antirutschvorrichtung nach irgendeinem der vorigen Ansprüche angebracht ist.

12. Der Laderaumboden nach Anspruch 11, wobei die Oberseite der Abdeckung (2) im Wesentlichen mit der Oberseite des Laderaumbodens zusammenfällt, sodass die Antirutschvorrichtungen in den Laderaumboden eingebettet sind.

13. Der Laderaumboden nach Anspruch 11 oder 12, wobei der Laderaumboden, für jede Antirutschvorrichtung, ein linkes L-förmiges Montageprofil (7) und ein rechtes L-förmiges Montageprofil (7) umfasst, wobei ein erster Schenkel (22) der Montageprofile an einer zugehörigen der Seitenwände (13) des Rinnenabschnitts (1) befestigt ist und wobei ein zweiter Schenkel (21) der Montageprofile am Laderaumboden befestigt ist.

14. Ein Lastkraftwagen oder Auflieger mit einem Laderaum, welcher einen Laderaumboden nach irgendeinem der Ansprüche 11 bis 13 umfasst.

15. Ein Bausatz zum Aufbau einer Antirutschvorrichtung nach irgendeinem der Ansprüche 1 bis 10, wobei der erwähnte Bausatz Folgendes umfasst: den Rinnenabschnitt (1), die Abdeckung (2), ein oder mehrere aufwärts und abwärts verschiebbare Elemente (5), auf denen die Vielzahl von Antirutschelementen (4) montiert sind, und den pneumatisch aufblasbaren Luftschlauch (6).

## Revendications

1. Dispositif antidérapant pour un plancher de cargaison d'un espace de cargaison d'un camion ou d'une remorque, ledit plancher de cargaison présentant une face supérieure agencée pour supporter des marchandises (43), dans lequel le dispositif antidérapant comprend :
- une section de gouttière (1) présentant deux parois latérales verticales (13), ladite section de gouttière (1) étant configurée pour être encastrée dans le plancher de cargaison ;
- un couvercle (2) qui est monté de manière amovible sur les parois latérales (13) de la section de gouttière (1) et qui comprend une pluralité d'ouvertures (3), ledit couvercle (2) ayant une face supérieure (33) configurée pour faire partie de la face supérieure du plancher de cargaison ;
- une pluralité d'éléments antidérapants en forme de plaque (4) situés dans lesdites ouvertures (3) et présentant une face supérieure (32) configurée pour faire partie de la face supérieure du plancher de cargaison ;
- un ou plusieurs éléments coulissants (5) vers le haut et vers le bas sur lesquels la pluralité d'éléments antidérapants (4) sont montés, lesdits éléments coulissants (5) présentant une position abaissée dans laquelle les éléments antidérapants (4) ne font pas saillie au-dessus de la face supérieure (33) du couvercle (2), et une position relevée dans laquelle les éléments antidérapants (4) font saillie au-dessus de la face supérieure (33) du couvercle (2), ladite position abaissée étant définie par une première butée pour les éléments coulissants (5) et ladite position relevée étant définie par une seconde butée pour les éléments coulissants (5) ; et
- un tuyau à air gonflable pneumatique (6) positionné entre la section de gouttière (1) et les éléments coulissants (5) et configuré pour déplacer les éléments coulissants vers le haut et vers le bas (5), ledit tuyau à air (6) présentant un état dégonflé dans lequel les éléments coulissants (5) butent contre ladite première butée et un état gonflé dans lequel les éléments coulissants (5) butent contre ladite deuxième butée.

2. Dispositif antidérapant selon la revendication 1, dans lequel les éléments coulissants (5) présentent un fond (34) configuré pour former au moins partiellement une surface de contact avec le tuyau à air (6) dans son état gonflé, dans lequel les surfaces de contact des éléments coulissants (5) présentent une première surface totale et dans lequel les faces supérieures (32) des éléments antidérapants (4) présentent une deuxième surface totale, ladite deuxième surface totale étant d'au moins 30 %, de préférence d'au moins 40 %, et au plus 70 %, de préférence au plus 60 % de la première surface totale.

3. Dispositif antidérapant selon la revendication 1 ou 2, dans lequel le tuyau à air (6) comprend une paroi extérieure entourant au moins une chambre creuse (31), ladite chambre creuse (31) s'étendant à travers le tuyau à air (6), dans lequel, à l'état gonflé du tuyau à air (6), la chambre creuse (31) est configurée pour être pressurisée à une pression d'au moins 75 kPa, de préférence au moins 100 kPa et plus préférablement au moins 125 kPa, et au plus 300 kPa, de préférence au plus 250 kPa et plus préférablement au plus 200 kPa.

4. Dispositif antidérapant selon l'une quelconque des revendications précédentes,
dans lequel les éléments coulissants (5) présentent des parois latérales verticales (10) dans lesquelles un évidement (11) est prévu formant une partie de guidage femelle, dans lequel les parois latérales (13) de la section de gouttière (1) sont munies d'une ou plusieurs parties de guidage mâles (20) et dans lequel les parties de guidage mâles et femelles (11, 20) sont configurées pour empêcher un déplacement longitudinal des éléments coulissants (5) par rapport à la section de gouttière (1).

5. Dispositif antidérapant selon l'une quelconque des revendications précédentes, où les éléments coulissants (5) présentent des parois latérales verticales (10) et dans lequel, à l'état dégonflé du tuyau à air, une extrémité libre des parois latérales verticales (10) est supportée sur la section de gouttière (1), en particulier sur un fond (12) de celle-ci, de sorte que la section de gouttière (1) forme ladite première butée.

6. Dispositif antidérapant selon l'une quelconque des revendications précédentes, dans lequel les éléments coulissants (5) présentent une surface supérieure qui est plus grande qu'une ouverture parmi ladite pluralité d'ouvertures (3) et dans lequel, à l'état gonflé du tuyau à air, la surface supérieure est en contact avec le couvercle (2) de sorte que le couvercle (2) forme ladite deuxième butée.

7. Dispositif antidérapant selon l'une quelconque des revendications précédentes, dans lequel le nombre d'éléments coulissants (5) est égal au nombre d'ouvertures (3) et dans lequel, pour chaque ouverture de ladite pluralité d'ouvertures (3), un élément coulissant est prévu sur lequel au moins un, en particulier un, élément antidérapant est monté.

8. Dispositif antidérapant selon l'une quelconque des revendications 1 à 6, dans lequel le dispositif antidérapant comprend seulement un élément coulissant vers le haut et vers le bas, qui, pour chaque ouverture de ladite pluralité d'ouvertures (3), est muni d'au moins une première partie de guidage (40), dans lequel le dispositif antidérapant comprend en outre, pour chaque ouverture de ladite pluralité d'ouvertures (3), un élément intermédiaire (38) sur lequel au moins un, en particulier un, élément antidérapant est monté, ledit élément intermédiaire (38) étant muni d'au moins une seconde partie de guidage (39), dans lequel les première et deuxième parties de guidage sont configurées pour empêcher un déplacement longitudinal d'un élément intermédiaire par rapport à l'élément coulissant.

9. Dispositif antidérapant selon l'une quelconque des revendications précédentes, dans lequel le tuyau à air (6) présente une première extrémité (25) munie d'une entrée (30) et une seconde extrémité (26) qui est sensiblement fermée, et dans lequel le dispositif antidérapant comprend un actionneur pneumatique qui est connecté à ladite entrée (30) et est configuré pour gonfler pneumatiquement le tuyau à air (6) de son état dégonflé à son état gonflé.

10. Dispositif antidérapant selon l'une quelconque des revendications précédentes, dans lequel le couvercle (2) comprend un ou plusieurs couvercles, chacun présentant une ou plusieurs de ladite pluralité d'ouvertures (3).

11. Plancher de cargaison pour un espace de cargaison d'un camion ou d'une remorque, ledit plancher de cargaison présentant une face supérieure qui est configurée pour supporter des marchandises (43) et une direction longitudinale (44) qui, en utilisation, coïncide sensiblement avec une direction de conduite du camion ou de remorque, dans lequel le plancher de cargaison comprend au moins deux évidements allongés s'étendant sur sensiblement toute la longueur du plancher de cargaison dans ladite direction longitudinale (44), et dans lequel un dispositif antidérapant selon l'une quelconque des revendications précédentes est placé.

12. Plancher de cargaison selon la revendication 11, dans lequel la face supérieure du couvercle (2) coïncide sensiblement avec la face supérieure du plancher de cargaison de sorte que les dispositifs antidérapants sont encastrés dans le plancher de cargaison.

13. Plancher de cargaison selon la revendication 11 ou 12, dans lequel le plancher de cargaison, pour chaque dispositif antidérapant, comprend un profil de montage gauche en forme de L (7) et un profil de montage droit en forme de L (7), dans lequel une première branche (22) des profils de montage est fixée à une paroi respective des parois latérale (13) de la section de gouttière (1) et dans lequel une deuxième branche (21) des profils de montage est fixée au plancher de cargaison.

14. Camion ou une remorque présentant un espace de cargaison comprenant un plancher de cargaison selon l'une quelconque des revendications 11 à 13.

15. Kit de construction pour construire un dispositif antidérapant selon l'une quelconque des revendications 1 à 10, ledit kit de construction comprenant : la section de gouttière (1), le couvercle (2), un ou plusieurs éléments coulissants vers le haut et vers le bas (5) sur lesquels la pluralité d'éléments antidérapants (4) sont montés et le tuyau à air gonflable pneumatique (6).
